# EUROPEAN PATENT APPLICATION

(11) **EP 2 628 853 A2**
(43) Date of publication of application: **21.08.2013**
(21) Application number: 13155750.6
(22) Date of filing: 19.02.2013
(51) Int. Cl.: E01H 5/02

(54) **Sleigh shovel**

(30) Priority: 20.02.2012 FI 20125195
(71) Applicant: Motoseal Components Oy, 26100 Rauma (FI)
(72) Inventor: Heino, Jussi, 26100 Rauma (FI)
(74) Representative: Kolster Oy Ab

(57) **Abstract**

A sleigh shovel (1) comprises a scoop (2) and a push bar (3), the push bar (3) comprising at least two first push bar portions (4) attached to the scoop (2) and projected upward from the scoop (2) and second push bar portions (5) arranged telescopically to the first push bar portions (4), one inside the other. The second push bar portions (5) are both steplessly movable in relation to the first push bar portions (4) for adjusting the length of the push bar (3) and completely detachable from the first push bar portions (4). The push bar (3) further comprises releasable locking arrangements (7) between the first push bar portions (4) and the second push bar portions (5) for locking the second push bar portions (5) immovably in relation to the first push bar portions (4).

## Description

### Background of the invention

The invention relates to a sleigh shovel.

A sleigh shovel typically comprises a scoop and a push bar fixedly attached thereto. However, a problem with this type of a conventional sleigh shovel is that only persons within a specific range of tallness are capable of using the sleigh shovel in an optimal manner without excess strain on their body so that the force applied for pushing the sleigh shovel is directed to the sleigh shovel at an optimal push angle, i.e., the sleigh shovel advances efficiently. In other words, the push bar of the sleigh shovel is dimensioned for a user of a specific height, while persons shorter or taller than this dimensioned height experience difficulties in using the sleigh shovel efficiently, without the person's body being subjected to extraordinary strain.

Publication JP 2003227114 discloses a sleigh shovel with a detachable push bar.

Publication CA 2243588 discloses a sleigh shovel with a push bar placed on the sides of the scoop so that the push bar can be moved towards the scoop to facilitate the storage of the sleigh shovel, and away from the scoop to move the push bar back to the position of use.

Publication FI 97074 discloses a sleigh shovel with a push bar whose position in relation to the scoop is changeable so that the push bar may be moved closer to the scoop for storage or transport of the sleigh shovel and again further away from the scoop when the sleigh shovel is to be used.

Publication JP 2003213641 also discloses sleigh shovel with a push bar whose position in relation to the scoop is changeable. When the position of the push bar is changed in relation to the scoop, the push bar moves parallel to the upper part of the scoop's side edges. Moving of the push bar in relation to the scoop changes the height of the push bar from ground, but only a little. Moreover, when the push bar is moved closer to the scoop, the upper part of the push bar may easily move too close to the scoop, which makes the sleigh shovel significantly more difficult to use.

### Brief description of the invention

It is an object of the present invention to provide a novel sleigh shovel.

The sleigh shovel of the invention comprises a scoop and a push bar, the push bar comprising at least two first push bar portions attached to the scoop and projecting upward from the scoop and second push bar portions arranged telescopically to the first push bar portions, one inside the other, the second push bar portions being both steplessly movable in relation to the first push bar portions for adjusting the length of the push bar and completely detachable from the first push bar portions, the push bar further comprising releasable locking arrangements between the first push bar portions and the second push bar portions for locking the second push bar portions immovably in relation to the first push bar portions.

The first push bar portions attached to the sleigh shovel scoop and the releasable locking arrangements arranged between them and the second push bar portions that are stepplessly movable in relation to the first push bar portions allow the length of the push bar of the sleigh shovel to be stepplessly adjusted and locked to a push bar length suitable for the user. Moreover, since the second push bar portions are entirely detachable from the first push bar portions, the upper part of the push bar formed by the second push bar portions and a third push bar portion interconnecting them and forming a handle of the push bar can be entirely detached from the first push bar portions forming a lower part of the push bar, thus allowing the size of the sleigh shovel to be reduced for transport and storage.

According to an embodiment the locking arrangement comprises a first locking part attached to an outer push bar portion and comprising at least one locking element arranged to extend at least partly around an inner push bar portion, the locking arrangement further comprising a second locking part arranged to set at least partly around a locking element in the first locking part for pressing the locking element against the inner push bar portion.

According to an embodiment, the locking arrangement comprises a first tubular locking part fastened to an outer push bar portion and having a first end and a second end, the first end of the first locking part being directed toward an inner push bar portion and comprising locking teeth that extend at least partly around the inner push bar portion, the locking arrangement further comprising a second tubular locking part to be moved at least partly around the first tubular locking part and having a first end and a second end, the first end of the second locking part being directed towards the outer push bar portion and the second tubular locking part being arranged to set at least partly around the locking teeth provided in the first tubular locking part for pressing the locking teeth against the inner push bar portion.

According to an embodiment, at least part of an outer surface on the side of the second end of the first tubular locking part comprises a male thread and at least part of an inner surface on the side of the first end of the second tubular locking part comprises a female thread that corresponds to the male thread on the first tubular locking part, which allows the second tubular locking part to be at least partly screwed around the first tubular locking part.

According to an embodiment, the second push bar portion comprises a first portion to be directed towards the scoop and a second portion to be directed away from the scoop, the second portion being at an angle to the first portion.

### Brief description of the figures

The invention will be described in greater detail with reference to the attached drawings, in which
Figure 1 is a schematic diagonal front view of a sleigh shovel;
Figure 2 is a schematic side view of the sleigh shovel of Figure 1;
Figure 3 is a schematic side view of a locking arrangement for a push bar of a sleigh shovel in a released state;
Figure 4 is a schematic side view of the locking arrangement of Figure 3 for a push bar of a sleigh shovel in a locked state;
Figure 5 is a schematic sectional side view of a released locking arrangement for a push bar of a sleigh shovel; and
Figure 6 is a schematic sectional side view of the locking arrangement of Figure 5 for a push bar of a sleigh shovel in a locked state;

In the figures, some embodiments of the invention are shown simplified for the sake of clarity. In the figures, like reference numerals identify like elements.

### Detailed description of the invention

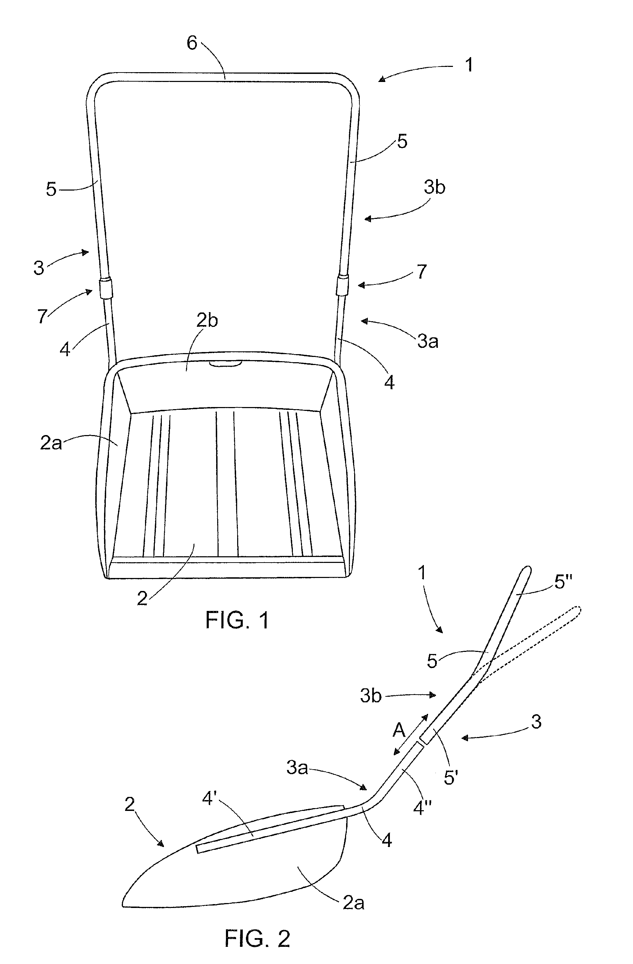

Figure 1 is a schematic front diagonal view of a sleigh shovel 1, and Figure 2 is a schematic side view of the sleigh shovel 1 of Figure 1. The sleigh shovel 1 has a scoop 2 and a push bar 3 attached to sides 2a of the scoop 2, the push bar 3 comprising a lower part 3a and an upper part 3b of the push bar 3. The lower part 3a of the push bar 3 comprises first push bar portions 4 attached to both sides 2a of the scoop 2 and comprising first portions 4' attached to the sides of the scoop 2 and supporting the scoop 2, and second portions 4" directed outward of the scoop 2 to extend or project upward from the scoop 2, the second portions being bent in relation to the first portions 4' and arranged to receive the upper part 3b of the push bar 3. The first push bar portions 4 may be detachable from the scoop 2. The upper part 3b of the push bar 3 comprises second push bar portions 5, which in turn comprise first portions 5' to be directed towards the scoop 2 and joined to the second portions 4" of the first push bar portions 4 to join the upper part 3b of the push bar 3 to the lower part 3a of the push bar 3. In addition, the second push bar portions 5 comprise second portions 5" extending away from the scoop 2 and bent in relation to the first portions 5'. The push bar 3 further includes a horizontal portion on the upper part 3b of the push bar 3, between the ends of the second portions 5" of the second push bar portions 5 directed away from the scoop 2, the horizontal portion forming a third push bar portion 6 of the push bar 3. The third push bar portion 6 forms a handle of the push bar 3 of the sleigh shovel 1, fastening the second push bar portions 5 together and thus forming an integral structure with the second push bar portions 5. The third push bar portion may also be detachable from the second push bar portions. Hence the upper part 3b of the push bar 3 is a bail-type structure consisting of interconnected second push bar portions 5 and the third push bar portion 6. The push bar 3 may also comprise a horizontal push bar portion arranged in association with the upper part of the rear wall 2b of the scoop 2 and fastened to the first push bar portions 4 e.g. by welding or fastenings to support the rear wall 2b of the scoop 2.

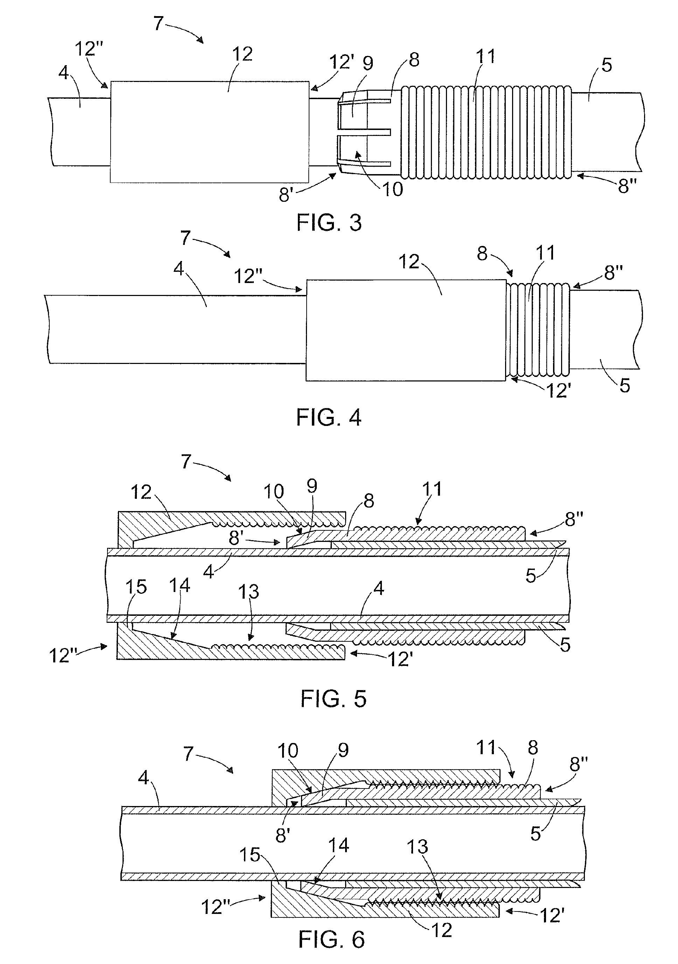

Further, Figure 1 schematically shows releasable locking arrangements 7 provided between the first push bar portions 4 and the second push bar portions 5 and arranged to lock the second push bar portions 5 immovably in relation to the first push bar portions 4, i.e., to lock the upper part 3b of the push bar 3 immovably in relation to the lower part 3a of the push bar 3. A possible embodiment of the locking arrangement 7 is disclosed in more detail with reference to Figures 3 to 6 below.

Figure 1 shows the sleigh shovel 1 in its condition of use with the first push bar portions 4 at the lower part 3a of the push bar 3 and the second push bar portions 5 at the upper part 3b of the push bar 3 placed one inside the other so that the first push bar portions 4 are placed inside the second push bar portions 5, or, in other words, the first portions 5' of the second push bar portions 5 are placed around the second portions 4" of the first push bar portions 4 to allow the upper part 3b of the push bar 3 to be moved telescopically in a stepless manner in relation to the lower part 3a of the push bar 3 either closer to the scoop 2 or further away from it, as schematically shown by arrow A in Figure 2. For the sake of clarity, Figure 2 does not show the locking arrangement 7. It is best seen in Figures 5 and 6. Both the first push bar portions 4 and the second push bar portions 5 are tubular portions with a circular cross-section. However, the outer diameter of the first push bar portions 4 is smaller than the inner diameter of the second push bar portions 5 to allow the first push bar portions 4 and the second push bar portions 5 to slide in relation to one another, the second push bar portions 5 being, however, at the same time supported to the outer surface of the first push bar portions 4 to prevent the second push bar portions 5 from substantially bending or swinging in relation to the first push bar portions 4.

Figures 3 to 6 are schematic side views of a locking arrangement 7 for a push bar 3 of a sleigh shovel 1, Figure 3 being a schematic side view of the locking arrangement 7 in a released state, Figure 4 a schematic side view of the locking arrangement 7 for the push bar 3 of the sleigh shovel 1 of Figure 3 in a locked state, Figure 5 a schematic and cross-sectional side view of the locking arrangement 7 for the push bar 3 of the sleigh shovel 1 in a released state and Figure 6 a schematic and cross-sectional side view of the locking arrangement 7 for the push bar 3 of the sleigh shovel 1 of Figure 5 in a locked state.

The locking arrangement 7 of Figures 3 to 6 includes a tubular first locking part 8 and second locking part 12 of a circular cross-section. The first locking part 8 is tubular and arranged around the second push bar portion 5, to an end of the first portion 5' of the second push bar portion 5 that is directed towards the scoop 2, i.e., towards the first push bar portion 4. The first locking part 8 is fastened to the second push bar portion 5 with a fit between the first locking part 8 and the second push bar portion 5 tight enough for the first locking part 8 to remain in place on the second push bar portion 5 when the locking arrangement 7 is being used. When necessary, adhesive substance, such as glue, may be provided between the first locking part 8 and the second push bar portion 5 to ensure that the first locking part 8 attaches to the second push bar portion 5. In other words, in the fit between the first push bar portion 4 and the second push bar portion 5 the first locking part 8 is arranged to the outer push bar portion, which in the embodiment of the figures is the second push bar portion 5 belonging to the upper part 3b of the push bar 3. The second locking part 12 is arranged to the push bar 3 so that it may move substantially freely about the first push bar portion 4 in the longitudinal direction thereof.

The first locking part 8 has a first end 8' directed towards the scoop 2 and a second end 8" directed away from the scoop 2. The first end 8' of the first locking part 8 extends around the first push bar portion 4, i.e. the inner push bar portion. The first end 8" comprises locking teeth 9 extending around the first push bar portion 4 both in its longitudinal and circumferential direction. The locking teeth 9 have a sloping surface 10 directed towards the second locking part 12. In addition, the first locking part 8 is provided with a male thread 11 on its outer surface, on the side of the second end 8", the thread extending from the second end 8" of the first locking part all the way to the vicinity of the locking teeth 9.

The second locking part 12 has a first end 12' directed away from the scoop 2 and a second end 12" directed towards the scoop 2. On the side of the first end 12' of the second locking part 12, beginning from the first end 12' of the second locking part 12 and extending towards the second end 12" of the second locking part 12, the inner surface of the locking portion 12 is provided with a female thread 13 terminating at a sloping surface 14 provided at the second end 12" of the second locking part 12 and directed towards the first locking part 8. The sloping surface 14 is formed by a conical surface provided on the inner surface of the second locking part 12, the conical surface being directed towards a central axis and reducing the open surface of the cross-section of the inner circumference of the second locking part 12 towards the second end 12" of the second locking part 12. The sloping surface 14 on the second locking part 12 has an angle of inclination that corresponds substantially to an angle of inclination of a sloping surface 10 on the locking teeth of the first locking part 8.

When the second push bar portion 5 is being locked to be immovable in relation to the first push bar portion 4, the second locking part 12 is moved towards the first locking part 8 until the female thread 13 on the second locking part 12 meets the male thread 11 on the first locking part 8. Next, the second locking part 12 is being turned while pressing it lightly towards the first locking part 8, the female thread 13 on the second locking part 12 setting to the male thread 11 on the first locking part 8, whereby the first locking part 8 and the second locking part 12 attach or stick to one another by means of the threads. As the turning of the second locking part 12 in relation to the first locking part 8 continues, the second locking part 12 moves parallel with the first 4 and second 5 push bar portions further around the first locking part 8. The second locking part 12 may be turned by a relatively small force around the first locking part 8 until the sloping surface 14 on the second locking part 12 meets the sloping surface 10 on the locking teeth 9 of the first locking part 8. The force needed for turning the second locking part 12 increases when the sloping surface 14 on the second locking part 12 meets the sloping surface 10 on the locking teeth 9 of the first locking part 8 and the second locking part 12 starts to press or squeeze the locking teeth 9 of the first locking part 8 against the first push bar portion 4 by the sloping surface 14. Next, the second locking part 12 is turned still further around the first locking part 8 until the locking teeth 9 are pressing against the first push bar portion 4 by a force that prevents the second push bar portion 5 from moving in relation to the first push bar portion 4. This is considered as accomplished when the second locking part 12 no longer turns in relation to the first locking part 8, or when a significantly strong force would be needed for turning it further. The threads allow the first and second locking parts to fasten together extremely strongly although only a very reasonable force is needed for the fastening.

The releasing of the locking arrangement 7, in turn, is achieved by turning the second locking part 12 to an opposite direction than above in relation to the first locking part 8. In that case the second locking part 12 is turned in relation to the first locking part 8 until the pressing force acting on the second push bar portion 5 is reduced to such an extent that the second push bar portion 5 can be moved in relation to the first push bar portion 4 by using only a small or a reasonable force. Consequently, the second locking part 12 does not necessarily need to be completely turned loose from the first locking part 8.

In other words, in the locking arrangement 7 disclosed above there is formed a pressure locking between the first push bar portion 4 and the second push bar portion 5, whereby a pressing force is created between the second locking part 12, the first locking part 8 and the first push bar portion 4, i.e. the inner push bar portion, that locks the second push bar portion 5 immovably in relation to the first push bar portion 4. In other words, the pressing force of the locking arrangement of Figures 3 to 6 that acts substantially perpendicularly on the outer surface of the first push bar portion 4 is achieved by a locking movement directed substantially parallel with the first 4 and the second 5 push bar portions, which allows structures extending in a transverse direction to the push bar 3 to be avoided.

The locking arrangement 7 of Figures 3 to 6 provides a simple means for accomplishing a stepless length adjustment of the push bar 3 of the sleigh shovel 1. Hence, by releasing the locking arrangement 7, moving the upper part 3b of the push bar 3 either towards the scoop 2 or away from it and then by re-locking the locking arrangement 7, it is easy for each user of the sleigh shovel 1 to adjust the push bar 3 stepplessly to a suitable length that allows the sleigh shovel 1 to be used efficiently without extraordinary strain on the user's body. In the locking arrangement 7 the first push bar portion 4 and the second push bar portion 5 of the push bar 3 become interlocked to an immovable state in a manner which is simple and reliable and yet requires relatively little force to use.

When the locking arrangement 7 is in a released state, the upper part 3b of the push bar 3 may be drawn away from the scoop 2 all the way to allow the second push bar portions 5 to move entirely away from around the first push bar portions 4, as schematically shown in Figure 2. This allows the total size of the sleigh shovel 1 to be decreased in a simple manner for storage or transport, for example. Depending on the embodiment of the sleigh shovel 1, the total size of the sleigh shovel 1 may be also reduced by detaching the first push bar portions from the scoop 2.

As disclosed above, the second push bar portion 5 on the upper part 3b of the push bar 3 comprises a first portion 5' directed towards the scoop 2 and a second portion 5" directed away from the scoop 2 and bent to an angle in relation to the first portion 5'. In Figure 2 the sleigh shovel 1 and, in particular, the push bar 3 are shown in a situation of use, in which the second portion 5" is turned upward in relation to the first portion 5'. When the upper part 3b of the push bar 3 is completely drawn away from the lower part 3a of the push bar 3, as schematically shown in Figure 2, the upper part 3b of the push bar 3 may be turned to an opposite position of use, in which the second portion 5" is turned downward in relation to its previous position, Figure 2 showing this schematically by a broken line. The disclosed shaping of the upper part 3b of the push bar 3 and the changeability of its position allow an embodiment of the sleigh shovel 1 to be achieved that also enables the push angle of the push bar 3 to be changed when the length of the push bar 3 is adjusted. If the adjustment of the push bar 3 to a length suitable for the user resulted to a situation of use in which the push angle of the sleigh shovel would not be optimal, it would be possible to simultaneously both adjust the length of the push bar 3 and change the position of the upper part 3b of the push bar 3 to set the push bar 3 to a length and position optimal with regard to both the strain caused to the person's body and the position of the scoop in relation to the ground surface or the user's preferences.

In the embodiment of Figures 5 and 6 the inner circumference of the second end 12" of the second locking part 12 is provided with a flange 15 that supports the second locking part 12 against the first push bar portion 4. The flange 15 centres the second locking part 12 and its female thread 13 in relation to the first locking part 8 and its male thread 11, thus facilitating the turning of the second locking part 12 in relation to the first locking part 8. However, the second locking part 12 may also be implemented without the flange 15 in question.

In some cases, features disclosed in this application may be used as such, regardless of other features. On the other hand, when necessary, features disclosed in this application may be combined in order to provide various combinations.

The drawings and the relating description are only intended to illustrate the idea of the invention. Details of the invention may vary within the scope of the claims.

In the locking arrangement 7 disclosed above the first locking parts 8 and the second locking parts 12 are attached together by threads of the locking portions in question. Alternatively, the threads could be replaced by mutually corresponding conical surfaces, for example. In that case, when the second locking part 12 is pressed towards the first locking part 8 substantially in the direction of the first 4 and second 5 push bar portions, the conical surface on the outer surface of the first locking part 8 and the conical surface on the inner surface of the second locking part 12 press against each other and the first locking part 8 and the second locking part 12 would attach together by friction force acting between said conical surfaces. This embodiment of the locking arrangement 7 is one possible alternative for example in a case where, unlike in the above examples, the push bar 3 of the sleigh shovel 1 is formed of a tube whose cross-sectional shape is other than circular.

In the above locking arrangement 7 the first locking part 8 comprises a plurality of locking teeth 9 around the second push bar portion 5, which teeth are at least partly separate from one another in the circumferential direction of the locking portion 8 and which in the locking arrangement 7 form locking elements pressing around the first push bar portion 4. Alternatively, the plurality of locking teeth 9 could be replaced by a locking element comprising an inclined conical surface directed towards the second locking part 12 and extending as a single uniform structure around the circumference of the second locking element 12 and, further, around the first tubular portion 4.

The interlocking of the first push bar portion 4 and the second push bar portion 5 can also be implemented by a clamp based on an eccentric or conical locking member.

In the fit or attachment between the lower part 3a and the upper part 3b of the above push bar 3 the first push bar portions 4 form inner push bar portions and the second push bar portions 5 form outer push bar portions. However, a further possible embodiment of the push bar 3 is one in which the first push bar portions 4 would form the outer push bar portions and the second push bar portions 5 would form the inner push bar portions, in which case the first locking part 8 would be fastened around the first push bar portion 4.

Further still, it is also possible to produce the portion of the push bar 3 that forms the inner push bar portions of the push bar 3 of a rod of a solid material.

## Claims

1. A sleigh shovel (1) comprising a scoop (2) and a push bar (3), the push bar (3) comprising at least two first push bar portions (4) attached to the scoop (2) and projecting upward from the scoop (2) and second push bar portions (5) arranged telescopically to the first push bar portions (4), one inside the other, the second push bar portions being both stepplessly movable in relation to the first push bar portions (4) for adjusting the length of the push bar (3) and completely detachable from the first push bar portions (4), the push bar (3) further comprising releasable locking arrangements (7) between the first push bar portions (4) and the second push bar portions (5) for locking the second push bar portions (5) immovably in relation to the first push bar portions (4).

2. A sleigh shovel as claimed in claim 1, **characterized in that** the locking arrangement (7) comprises a first locking part (8) attached to the outer push bar portion (5) and comprising at least one locking element arranged to extend at least partly around the inner push bar portion (4) and that
the locking arrangement (7) further comprises a second locking part (12) arranged to set at least partly around the locking element on the first locking part (8) for pressing the locking element against the inner push bar portion (4).

3. A sleigh shovel as claimed in claim 1 or 2, **characterized in that** the second locking part (12) is arranged to be moved around the first locking part (8) substantially parallel with the first push bar portion (4) and the second push bar portion (5).

4. A sleigh shovel as claimed in any one of the preceding claims, **characterized in that** the locking arrangement (7) comprises a first tubular locking part (8) fastened to the outer push bar portion (5) and having a first end (8') and a second end (8"), the first end (8') of the first locking part (8) being directed towards the inner push bar portion (4) and comprising locking teeth (9) extending at least partly around the inner push bar portion (4) and that
the locking arrangement (7) further comprises a second tubular locking part (12) movable around the first tubular locking part (8) and having a first end (12') and a second end (12"), the first end (12') of the second locking part (12) being directed towards the outer push bar portion (5) and the second tubular locking part (12) being arranged to set at least partly around the locking teeth (9) on the first tubular locking part (8) for pressing the locking teeth (9) against the inner push bar portion (4).

5. A sleigh shovel as claimed in claim 4, **characterized in that** the open cross-sectional surface of the inner circumference of the second tubular locking part (12) is arranged to decrease towards the second end (12") of the second tubular locking part (12) for forming a press locking between the outer surface of the inner push bar portion (4), the locking teeth (9) on the first tubular locking part (8) and the second tubular locking part (12).

6. A sleigh shovel as claimed in claim 5, **characterized in that** the open cross-sectional surface of the inner circumference of the second tubular locking part (12) is arranged to decrease in a conical manner towards the second end (12") of the second tubular locking part (12).

7. A sleigh shovel as claimed in any one of the preceding claims, **characterized in that** both the first push bar portions (4) and the second push bar portions (5) are tubular portions with a circular cross-section.

8. A sleigh shovel as claimed in any one of claims 4 to 7, **characterized in that** at least part of the outer surface on the side of the second end (8") of the first tubular locking part (8) comprises a male thread (11) and that at least part of the inner surface on the side the of the first end (12') of the second tubular locking part (12) comprises a female thread (13) that corresponds to the male thread (11) on the first tubular locking part (8), the second tubular locking part (12) thus being turnable at least partly around the first tubular locking part (8).

9. A sleigh shovel as claimed in any one of the preceding claims, **characterized in that** the second push bar portions (5) are arranged to set around the first push bar portions (4) in a telescopic manner.

10. A sleigh shovel as claimed in any one of the preceding claims, **characterized in that** the second push bar portion comprises a first portion (5') to be directed towards the scoop (2) and a second portion (5") to be directed away from the scoop (2), the second portion (5") being at an angle to the first portion (5').

11. A sleigh shovel as claimed in any one of the preceding claims, **characterized in that** the first push bar portions (4) are detachable from the scoop (2).
